# EUROPEAN PATENT SPECIFICATION

(11) **EP 3 549 693 B1**
(45) Date of publication and mention of the grant of the patent: **30.06.2021**
(21) Application number: 19167448.0
(22) Date of filing: 04.04.2019
(51) Int. Cl.: B22C 7/02, B22C 9/04, B29C 64/00, B33Y 80/00

(54) **A METHOD OF FORMING A TURBINE BLADE**
EIN VERFAHREN ZUM FORMEN EINER TURBINENSCHAUFEL
MÉTHODE DE FABRICATION D'UNE AUBE DE TURBINE

(30) Priority: 05.04.2018 US 201862653327 P; 04.05.2018 US 201815971603
(43) Date of publication of application: 09.10.2019
(73) Proprietor: Raytheon Technologies Corporation, Farmington, CT 06032 (US)
(72) Inventor: FRASER, Ian Alasdair, Ruckersville, VA Virginia 22968 (US); AVERY, James F., Charlottesville, VA Virginia 22901 (US)
(74) Representative: Dehns

(56) References cited:
- US-A- 4 970 125
- US-A1- 2002 029 863
- US-A1- 2018 001 561
- US-A1- 2018 320 006

## Description

### BACKGROUND

Exemplary embodiments of the present disclosure relate generally to a method of forming a blade or a vane for a gas turbine engine and, in one embodiment, to a method of forming a blade or a vane for a gas turbine engine using a positive witness band.

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

Both the compressor and turbine sections include rotating blades alternating between stationary vanes. The vanes and rotating blades in the turbine section extend into the flow path of the high-energy exhaust gas flow. All structures within the exhaust gas flow path are exposed to extreme temperatures and need to be formed to certain, particular dimensions.

Accordingly, it is desirable to provide for a method of forming at least vanes that provides for greater dimensional control.

US 2018/001561 discloses a method of generating investment casting patterns using 3D printing. US 2002/029863 discloses a method of casting using a wax mould, a ceramic core and a wax seal, the wax seal creating a shoulder on the cast component which is subsequently ground away. US 4970125 discloses an airfoil casting comprising a stabilizing band utilized during casting for inclusion trapping and dimensional stabilization, the band being removed following the casting process.

### BRIEF DESCRIPTION

According to an aspect of the disclosure, a method of forming a turbine blade or vane is provided and includes forming a wax pattern in a turbine blade or vane shape and additively forming a positive witness band around a tip portion of the wax pattern, forming a mold of the wax pattern and the positive witness band, casting the turbine blade or vane with a positive witness band formation corresponding to the positive witness band in the mold, cutting the turbine blade or vane along the positive witness band formation, and forming with an investment casting, from the wax pattern, the turbine blade or vane with a positive witness band formation corresponding to the positive witness band in the mold.

The additive forming may include at least one of fused deposition modeling (FDM), selective laser sintering (SLS), direct metal laser sintering (DMLS), laser beam melting (LBM), electron beam melting (EBM), inkjet 3D printing and stereolithography.

The additive forming of the positive witness band may be executed such that the positive witness band is about 0.030" (0.76 mm) wide and protrudes from the tip portion of the wax pattern by about 0.005-0.010" (0.13-0.25 mm).

The additive forming of the positive witness band may be executed such that the positive witness band comprises a fillet.

The additive forming of the positive witness band may be executed such that the positive witness band traverses sacrificial portions of the wax pattern. The method includes forming a mold of the wax pattern and the positive witness band, casting the turbine blade or vane with a positive witness band formation corresponding to the positive witness band in the mold and cutting the turbine blade or vane along the positive witness band formation.

The turbine blade or vane with the positive witness band formation may have a substantially uniform wall thickness proximate to the positive witness band formation.

The cutting may include driving a cutting tool to execute the cutting along the positive witness band formation.

These and other advantages and features will become more apparent from the following description taken in conjunction with the drawings.

### BRIEF DESCRIPTION OF THE DRAWINGS

The following descriptions should not be considered limiting but provided by way of example only. With reference to the accompanying drawings, like elements are numbered alike:
FIG. 1 is a schematic, partial cross-sectional view of a gas turbine engine in accordance with this disclosure;
FIG. 2 is a schematic view of a portion of a two-stage high pressure turbine of the gas turbine engine;
FIG. 3 is a flow diagram illustrating a method of forming a turbine blade or vane in accordance with embodiments;
FIG. 4 is a perspective view of a wax pattern having a turbine blade shape with a positive witness band in accordance with embodiments;
FIG. 5 is a perspective view of a wax pattern having a turbine blade shape with a positive witness band in accordance with embodiments;
FIG. 6 is a perspective view of a wax pattern having a turbine blade shape with a positive witness band in accordance with embodiments; and
FIG. 7 is a flow diagram illustrating a method of forming a turbine blade or vane with a positive witness band formation in accordance with embodiments.

These and other advantages and features will become more apparent from the following description taken in conjunction with the drawings.

### DETAILED DESCRIPTION

A detailed description of one or more embodiments of the disclosed apparatus and method are presented herein by way of exemplification and not limitation with reference to the Figures.

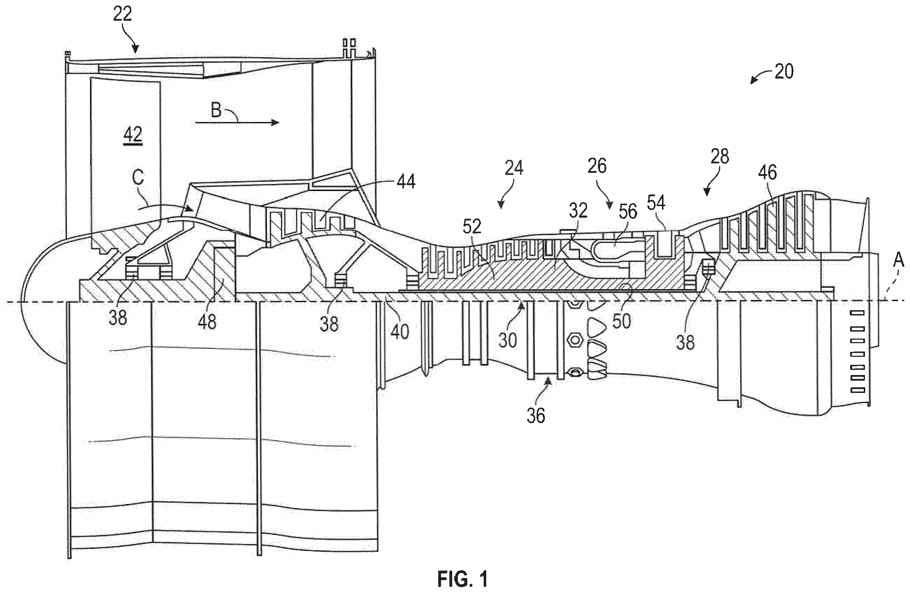

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5} ([(Tram °K)/(288.1 °K)]^{0.5}). The "Low corrected fan tip speed" as disclosed herein according to one non-limiting embodiment is less than about 1150 ft/second (350.5 m/sec).

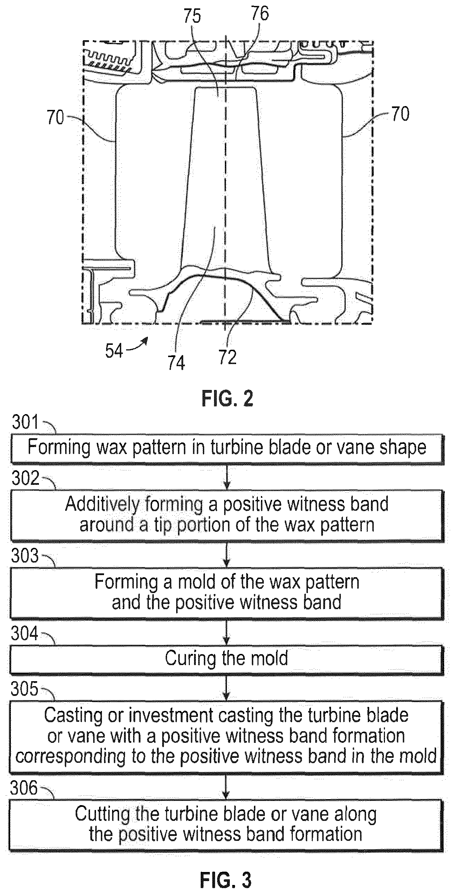

FIG. 2 illustrates a portion of a high pressure turbine 54. As shown in FIG. 2, the high pressure turbine 54 includes high pressure turbine stage vanes 70 which are located forward and aft of a turbine disk 72. The turbine disk 72 has a plurality of turbine blades 74 secured thereto. The turbine blades 74 rotate with their outermost tips 75 proximate to a blade outer air seal (BOAS) 76.

Although a two-stage high pressure turbine is illustrated, other high pressure turbines are considered to be within the scope of various embodiments of the present disclosure.

With reference to FIG. 3, a method of forming a turbine blade or vane, such as one or more of the high pressure turbine stage vanes 70 or one or more of the turbine blades 74 of FIG. 2, is provided. As shown in FIG. 3, the method includes forming a wax pattern in a turbine blade or vane shape (block 301) and additively forming a positive witness band around a tip portion of the wax pattern (block 302). The method further includes forming a mold of the wax pattern and the positive witness band (block 303) by, for example, dipping the wax pattern and the positive witness band in a curable liquid, such as a ceramic or ceramic-based liquid, curing the mold (block 304) and casting or investment casting the turbine blade or vane with a positive witness band formation corresponding to the positive witness band in the mold (block 305). Once the casting or the investment casting is completed, the method may further include cutting the turbine blade or vane along the positive witness band formation (block 306).

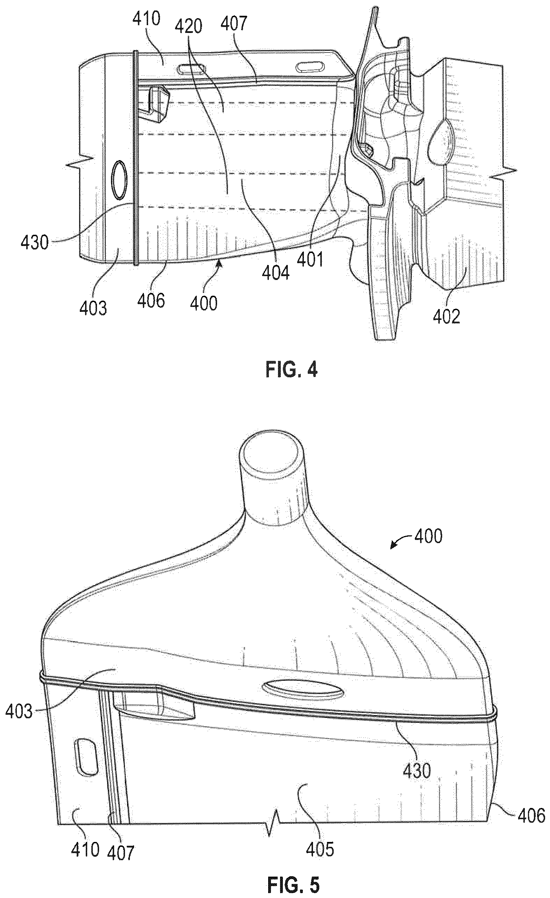

With reference to FIGS. 4-6 (which relate to the case of the wax pattern having the turbine blade shape with the understanding that the following description applies similarly to a wax pattern having the vane shape) and, in accordance with embodiments, the wax pattern of the method of FIG. 3 is provided as a wax pattern 400 and includes a root 401, which is attachable to an additional wax pattern 402 of a platform of a turbine disk, a tip portion 403 that is disposed opposite of or radially outwardly of the root 401, a pressure surface 404 and a suction surface 405. The pressure and suction surfaces 404 and 405 oppose one another and extend between a leading edge 406 and a trailing edge 407 from the root 401 to the tip portion 403. Respective shapes and topographies of the pressure and suction surfaces 404, 405 as well as the leading and trailing edges 406, 407 are formed and provided such that a resulting turbine blade can efficiently interact with high pressure and high temperature gases flowing through the high pressure turbine 54.

As shown in FIGS. 4-6, the wax pattern 400 further includes sacrificial portions 410 disposed at least along the trailing edge 407, cooling circuit elements 420 (see FIG. 4), which are provided in an interior of the wax pattern 400 and are used to define cooling circuits therein, and an additively manufactured positive witness band 430. The additively manufactured positive witness band 430 extends around an entirety of the tip portion 403 and may traverse the sacrificial portions 410 as well as the pressure and suction surfaces 404, 405 between the leading and trailing edges 406, 407. The additively manufactured positive witness band 430 may be substantially perpendicular with respect to the trailing edge 407.

The additively manufactured positive witness band 430 can be formed from various additive manufacturing processes including, but not limited to, at least one or more of fused deposition modeling (FDM), selective laser sintering (SLS), direct metal laser sintering (DMLS), laser beam melting (LBM), electron beam melting (EBM), inkjet 3D printing, stereolithography, or any other suitable additive layer manufacturing (ALM) process. The principle behind additive manufacturing processes involves the selective melting of atomized precursor material and producing the lithographic buildup of the workpiece. In some ALM processes, powder beds are melted by a directed energy source. The melting of the powder occurs in a small localized region of the energy beam, producing small volumes of melting, called melt pools, followed by rapid solidification, allowing for very precise control of the solidification process in the layer-by-layer fabrication of the workpiece. An example of a particular type of system is a PBF-L (powder bed fusion - laser) additive system where the energy beam is a laser. Any of the above devices may be directed by three-dimensional geometry solid models developed in Computer Aided Design (CAD) software systems.

In addition, the additively manufactured positive witness band 430 may include or be formed of a material that is similar to or different from that of the tip portion 403 as long as the material is compatible with the additive manufacturing process being employed for its formation.

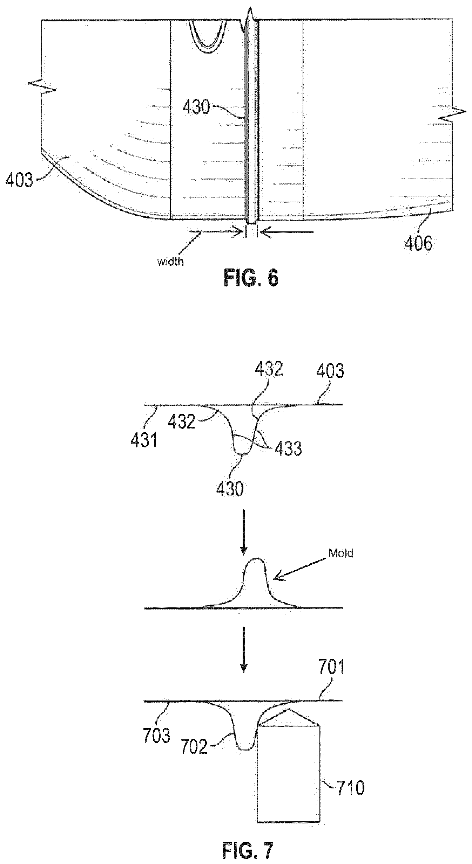

In accordance with further embodiments and, as shown in FIG. 6, the additively manufactured positive witness band 430 may be formed to be about 0.030" (0.76 mm) wide (in the radial dimension defined from the root 401 to the tip portion 403) and may protrude from a surface 431 of the tip portion 403 by about 0.005-0.010" (0.13-0.25 mm) (in a dimension perpendicular to the radial dimension).

In accordance with further embodiments and, with reference to FIG. 7, the additively manufactured positive witness band 430 may include a fillet 432 along an entirety of its base or its interface with the surface 431. The fillet 432 forms a smooth curvature from the surface 431 to witness band sidewalls 433. A radius of curvature of the fillet 432 may be about 0.005-0.010" (0.13-0.25 mm).

With continued reference to FIG. 7, the casting or the investment casting processes result in the formation of a turbine blade or vane 701 with a positive witness band formation 702 corresponding entirely in shape, size and location to the additively manufactured positive witness band 430. As shown in FIG. 7, once the casting or the investment casting is completed, a cutting tool 710 can be driven along the positive witness band formation 702 to thereby cut the turbine blade or vane 701 to form the tip 75 (see FIG. 2). Thus, the positive witness band formation 702 effectively provides relief from further thinning of the walls 703 of the turbine blade or vane 701 (in accordance with embodiments, the walls 703 have a substantially uniform thickness proximate to the positive witness band formation 702). Moreover, the positive witness band formation 702 will act as a stand-off that gives the foundry or manufacturing facility where the cutting is executed a range for which to cut as opposed to a single witness line which can be difficult to follow with a cutting tool.

As used herein, the terms "turbine blade", "turbine vane" or "turbine blade or vane" can be used interchangeably with "turbine aerodynamic element," which is disposable within a flow of high pressure and high temperature fluids in a turbine to aerodynamically interact with such high pressure and high temperature fluids.

Benefits of the features described herein are the provision of a method of forming a turbine blade that includes a positive witness band formation which can be used to improve cutting processes. Since the positive witness band formation results from the presence of an additively manufactured positive witness band, the positive witness band formation protrudes outwardly from the turbine blade surface and facilitates the cutting.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the invention, as defined in the appended claims. In addition, many modifications may be made to adapt a particular situation or material to the teachings of the present disclosure without departing from the scope of the invention, as defined in the appended claims.

Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of forming a turbine blade or vane (701), comprising:
forming (301) a wax pattern (400) in a turbine blade or vane shape;
additively forming (302) a positive witness band (430) around a tip portion (403) of the wax pattern;
forming (303) a mold of the wax pattern and the positive witness band;
casting (305) the turbine blade or vane (701) with a positive witness band formation (702) corresponding to the positive witness band in the mold;
cutting (306) the turbine blade or vane along the positive witness band formation; and
forming with an investment casting (305), from the wax pattern, the turbine blade or vane with a positive witness band formation (702) corresponding to the positive witness band in the mold.

2. The method according to claim 1, wherein the additive forming comprises at least one of fused deposition modeling (FDM), selective laser sintering (SLS), direct metal laser sintering (DMLS), laser beam melting (LBM), electron beam melting (EBM), inkjet 3D printing and stereolithography.

3. The method according to claim 1 or 2, wherein the additive forming of the positive witness band (430) is executed such that the positive witness band is about 0.030" (0.76 mm) wide and protrudes from the tip portion (403) of the wax pattern by about 0.005-0.010" (0.13-0.25 mm).

4. The method according to any preceding claim, wherein the additive forming of the positive witness band (430) is executed such that the positive witness band comprises a fillet (432).

5. The method according to any preceding claim wherein the turbine blade or vane (701) with the positive witness band formation (702) has a substantially uniform wall thickness proximate to the positive witness band formation.

6. The method according to any preceding claim, wherein the cutting (306) comprises driving a cutting tool (710) to execute the cutting along the positive witness band formation (702).

## Patentansprüche

1. Verfahren zum Ausbilden einer Turbinenlaufschaufel oder -leitschaufel (701), umfassend:
Ausbilden (301) eines Wachsmusters (400) in einer Turbinenlaufschaufel- oder -leitschaufelform;
additives Ausbilden (302) eines positiven Hilfsstreifens (430) um einen Spitzenabschnitt (403) des Wachsmusters herum;
Ausbilden (303) einer Gussform aus dem Wachsmuster und dem positiven Hilfsstreifen;
Gießen (305) der Turbinenlaufschaufel oder -leitschaufel (701) mit einer Formation (702) des positiven Hilfsstreifens entsprechend dem positiven Hilfsstreifen in der Gussform;
Schneiden (306) der Turbinenlaufschaufel oder -leitschaufel entlang der Formation des positiven Hilfsstreifens; und
Ausbilden der Turbinenlaufschaufel oder -leitschaufel mit einer Formation (702) des positiven Hilfsstreifens entsprechend dem positiven Hilfsstreifen in der Gussform mit einem Feinguss (305) aus dem Wachsmuster.

2. Verfahren nach Anspruch 1, wobei das additive Ausbilden mindestens eines von Schmelzschichtung (FDM), selektivem Lasersintern (SLS), direktem Metalllasersintern (DMLS), Laserstrahlschmelzen (LBM), Elektronenstrahlschmelzen (EBM), Tintenstrahl-3D-Druck und Stereolithografie umfasst.

3. Verfahren nach Anspruch 1 oder 2, wobei das additive Ausbilden des positiven Hilfsstreifens (430) so ausgeführt wird, dass der positive Hilfsstreifen etwa 0,030 Zoll (0,76 mm) weit ist und über den Spitzenabschnitt (403) des Wachsmusters um etwa 0,005-0,010 Zoll (0,13-0,25 mm) herausragt.

4. Verfahren nach einem der vorhergehenden Ansprüche, wobei das additive Ausbilden des positiven Hilfsstreifens (430) so ausgeführt ist, dass der positive Hilfsstreifen eine Ausrundung (432) umfasst.

5. Verfahren nach einem der vorhergehenden Ansprüche, wobei die Turbinenlaufschaufel oder -leitschaufel (701) mit der Formation (702) des positiven Hilfsstreifens eine im Wesentlichen einheitliche Wanddicke in der Nähe zu der Formation des positiven Hilfsstreifens aufweist.

6. Verfahren nach einem der vorhergehenden Ansprüche, wobei das Schneiden (306) ein Führen eines Schneidewerkzeugs (710) umfasst, um das Schneiden entlang der Formation (702) des positiven Hilfsstreifens auszuführen.

## Revendications

1. Procédé de formage d'une aube ou d'une pale de turbine (701), comprenant :
le formage (301) d'un motif de cire (400) en forme d'aube ou de pale de turbine ;
le formage de manière additive (302) d'une bande témoin positive (430) autour d'une partie de pointe (403) du motif de cire ;
le formage (303) d'un moule du motif de cire et de la bande témoin positive ;
le moulage (305) de l'aube ou de la pale de turbine (701) avec une formation de bande témoin positive (702) correspondant à la bande témoin positive dans le moule ;
la découpe (306) de l'aube ou de la pale de turbine le long de la formation de bande témoin positive ; et
le formage avec un moulage de précision (305), à partir du motif de cire, de l'aube ou de la pale de turbine avec une formation de bande témoin positive (702) correspondant à la bande témoin positive dans le moule.

2. Procédé selon la revendication 1, dans lequel le formage additif comprend au moins un parmi la modélisation par dépôt fondu (FDM), le frittage laser sélectif (SLS), le frittage laser direct de métal (DMLS), la fusion par faisceau laser (LBM), la fusion par faisceau d'électrons (EBM), l'impression 3D à jet d'encre et la stéréolithographie.

3. Procédé selon la revendication 1 ou 2, dans lequel le formage additif de la bande témoin positive (430) est exécutée de sorte que la bande témoin positive a une largeur d'environ 0,030" (0,76 mm) et dépasse à partir de la partie de pointe (403) du motif de cire d'environ 0,005 à 0,010" (0,13 à 0,25 mm) .

4. Procédé selon une quelconque revendication précédente, dans lequel le formage additif de la bande témoin positive (430) est exécuté de sorte que la bande témoin positive comprend un congé (432) .

5. Procédé selon une quelconque revendication précédente, dans lequel l'aube ou la pale de turbine (701) avec la formation de bande témoin positive (702) a une épaisseur de paroi sensiblement uniforme à proximité de la formation de bande témoin positive.

6. Procédé selon une quelconque revendication précédente, dans lequel la découpe (306) comprend l'entraînement d'un outil de découpe (710) pour exécuter la découpe le long de la formation de bande témoin positive (702).
